# EUROPEAN PATENT APPLICATION

(11) **EP 1 911 951 A1**
(43) Date of publication of application: **16.04.2008**
(21) Application number: 06425697.7
(22) Date of filing: 10.10.2006
(51) Int. Cl.: F02D 9/10, F02D 11/10, H02K 29/08, F16K 27/02

(54) **Throttle valve with three-phase brushless motor for an internal-combustion engine**

(71) Applicant: MAGNETI MARELLI POWERTRAIN S.p.A., 20011 Corbetta (IT)
(72) Inventor: Colli, Marcello, 42100 Reggio Emilia (IT); Musoleni, Stefano, 40122 Bologna (IT); Baldassari, Andrea, 40132 Bologna (IT); Ferretti, Giorgio, 44100 Ferrara (IT); Bellato, Nazario, 40131 Bologna (IT)
(74) Representative: Maccagnan, Matteo

(57) **Abstract**

Described herein is a throttle valve (1) for an internal-combustion engine; the throttle valve (1) is provided with: a three-phase brushless electric motor (3) having three stator windings (12) and three angular-position sensors (13) designed to determine the angular position of a rotor of the electric motor (3); a valve seat (4); a turnable disk element or butterfly (5), which engages the valve seat (4) and is mounted on a shaft (6) so that it can rotate about an axis (7) of rotation to turn between an opening position and a closing position of the valve seat (4) under the thrust of the electric motor (3); a gear transmission (8) to connect the electric motor (3) to the shaft (6) of the disk element (5); and an electronic control unit (18) designed to drive the electric motor (3) according to a feedback control logic using as feedback quantity the angular position of the disk element (5) about the axis (7) of rotation, measured by means of the three angular-position sensors (13) integrated in the electric motor (3).

## Description

### TECHNICAL FIELD

The present invention relates to a throttle valve with three-phase brushless motor for an internal-combustion engine.

### BACKGROUND ART

In internal-combustion petrol engines there is normally provided a throttle valve, which regulates the flowrate of the air that is supplied to the cylinders. A throttle valve has a valve body housing a valve seat engaged by a turnable disk element or butterfly, which is fitted on a rotating shaft so as to turn between an opening position and a closing position as a result of the action of a DC electric motor coupled to the shaft itself by means of a gear transmission. Coupled to one end of the shaft is a position sensor, which is designed to detect the angular position of the shaft (i.e., of the disk element) to enable feedback control of the electric motor.

The position sensor comprises a rotor, which is mounted on the shaft, and a stator, which faces the rotor to detect the angular position of the rotor itself. The position sensor can be of a "contact" type, typically constituted by a potentiometer (i.e., it envisages a mechanical connection between the rotor and the stator), or else of a "contactless" type (i.e., it does not envisage a mechanical connection between the rotor and the stator of the position sensor). An example of an inductive position sensor of a "contactless" type used to detect the angular position of a shaft of an electronically controlled throttle valve is provided by the patent No. US6236199B1.

The electric motor, the gear transmission, and the position sensor are housed within a chamber for housing the valve body, said housing chamber being closed by a removable lid typically made of plastic material or metal material. The lid also carries an electrical connector, by means of which the throttle valve is connected electrically to the electrical system of the internal-combustion engine. Fixed to an internal surface of the lid is a printed circuit, which carries the stator of the position sensor and the electrical connections between the position sensor and the electrical connector and between the electric motor and the electrical connector.

The patent No. US5672818B1 provides an example of a throttle valve in which the stator of the position sensor is fixed to the lid of the housing chamber.

However, the construction of a lid of the type described above is particularly complex, in so far as the lid must both guarantee an indispensable fluid-tight seal to prevent in use the housing chamber from being contaminated by external agents and guarantee an excellent precision in terms of planarity and of stator of the position sensor to prevent introduction of errors in the reading of the position sensor itself. In addition, assembly of a lid of the type referred to above is complex on account of the high number of components that must be mounted with precision on the lid itself.

### DISCLOSURE OF INVENTION

The aim of the present invention is to provide a throttle valve with three-phase brushless motor for an internal-combustion engine, said throttle valve being without the drawbacks described above and, in particular, build easy and inexpensive to produce.

According to the present invention, a throttle valve with three-phase brushless motor is provided for an internal-combustion engine according to what is claimed in the annexed claims.

### BRIEF DESCRIPTION OF THE DRAWINGS

The present invention will now be described with reference to the annexed plate of drawings, which illustrates a nonlimiting example of embodiment thereof and in which:
- Figure 1 is a schematic front view, with parts removed for reasons of clarity, of a throttle valve made in accordance with the present invention; and
- Figure 2 is a schematic plan view, with parts removed for reasons of clarity, of the throttle valve of Figure 1.

### PREFERRED EMBODIMENTS OF THE INVENTION

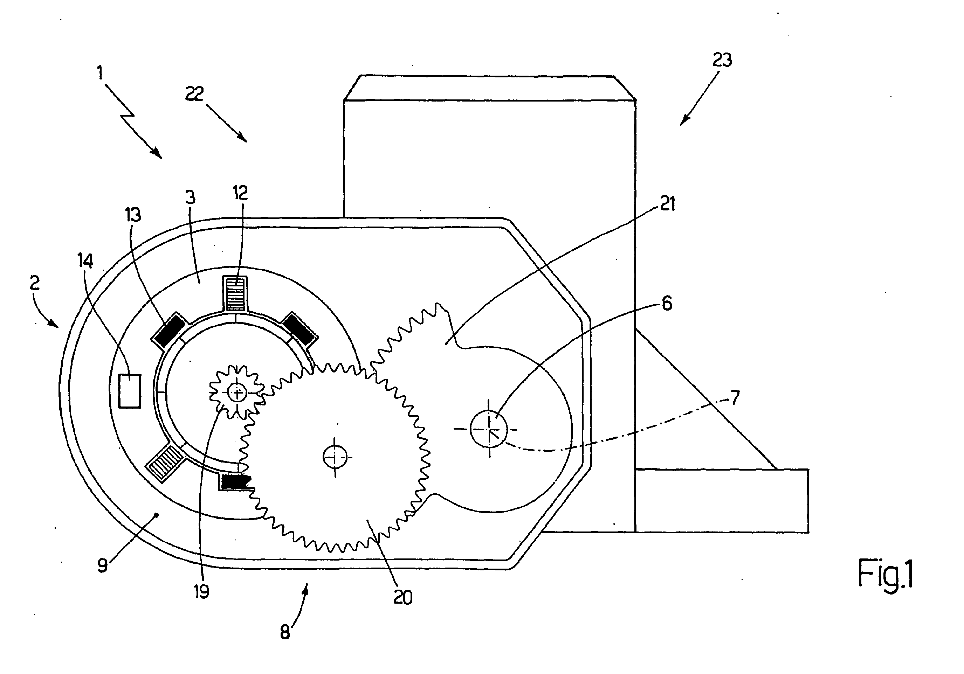

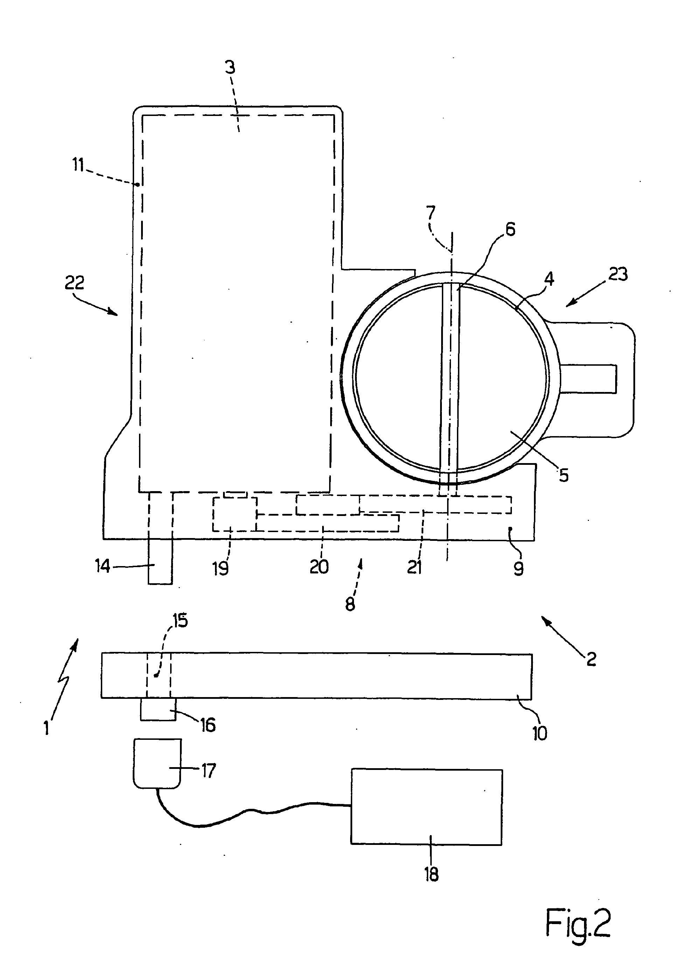

In Figure 1, the reference number 1 designates as a whole an electronically controlled throttle valve for an internal-combustion engine (not illustrated). The throttle valve 1 comprises a valve body 2, which houses an electric motor 3, a valve seat 4 (illustrated in Figure 2), which has a cylindrical tubular shape, and a turnable disk element or butterfly 5 (illustrated in Figure 2), which engages the valve seat 4 and displaces between an opening position and a closing position as a result of the action of the electric motor 3. The disk element 5 is fitted on a shaft 6 presenting a longitudinal axis 7 of rotation for rotating between the opening position and the closing position as a result of the action of the electric motor 3 coupled to the shaft 6 itself by means of a gear transmission 8 having an effect of gearing-down (i.e., of reduction of the angular velocity and of increase in the torque).

The valve body 2 has a chamber 9, which is closed by a removable lid 10 (illustrated in Figure 2) and houses both the electric motor 3 and the gear transmission 8. In particular, the electric motor 3 has a cylindrical shape and is set in a tubular housing 11 (illustrated in Figure 2), which extends within the chamber 9 and is set alongside the valve seat 4.

The electric motor 3 is a three-phase brushless motor and comprises three stator windings 12 (schematically illustrated in Figure 1), which are uniformly distributed around a rotor of the electric motor 3 and are hence mechanically spaced apart from one another by 120°. In addition, the electric motor 3 comprises three Hall-effect angular-position sensors 13, which are integrated in the electric motor 3, are designed to determine the angular position of the rotor of the electric motor 3, and are uniformly distributed around the rotor of the electric motor 3 and are hence mechanically spaced apart from one another by 120°.

According to what is illustrated in Figure 2, the electric motor 3 further comprises a male electrical connector 14, which is electrically connected both to the three stator windings 12 and to the three angular-position sensors 13 and is designed to be coupled with a corresponding female connector 15. According to a preferred embodiment, the male electrical connector 14 is set facing the lid 10, and the lid 10 itself has a through hole 16 in a position corresponding to the male electrical connector 14 so as to enable coupling between the male electrical connector 14 and the female connector 15. Preferably, provided around the through hole 16 of the lid 10 is a tubular element 17, which rises from the lid 10 and has the purpose both of constituting a mechanical protection of the electrical connector 14 and of establishing a mechanical coupling with the female connector 15. The female connector 15 is electrically connected to an electronic control unit 18 designed to drive the electric motor 3 according to a feedback control logic, using as feedback quantity the angular position of the disk element 5 about the axis 7 of rotation.

According to a different embodiment (not illustrated), part or all of the driving electronics of the electronic control unit 18 is arranged within the housing chamber 9 and is supported by a printed connection circuit set within the housing chamber 9 itself.

The electronic control unit 18 uses the signals supplied by the three angular-position sensors 13 to determine with precision and rapidity the angular position of the rotor of the electric motor 3 and hence handle switching of the electrical supply of the three stator windings 12. In addition, according to the present invention, the electronic control unit 18 uses the signals supplied by the three angular-position sensors 13 also to determine the angular position of the disk element 5 about the axis 7 of rotation. Consequently, the throttle valve 1 does not comprise other angular-position sensors in addition to the three angular-position sensors 13 integrated in the electric motor 3. It should be emphasized that the signals supplied by the three angular-position sensors 13 can be used to determine the angular position of the disk element 5 in so far as the gear transmission 8 renders the shaft 6 of the disk element 5 angularly fixed to the rotor of the electric motor 3.

According to the preferred embodiment illustrated in Figures 1 and 2, the gear transmission 8 comprises a gear 19, which is fixed to the rotor of the electric motor 3 and meshes with an external ring gear of an idle gear 20; an internal ring gear of the idle gear 20 meshes with a further gear 21 fixed to the shaft 6 of the disk element 5.

According to a preferred embodiment, the valve body 2 is made up of an actuation module 22 and a valve module 23, which are made independently of one another and are joined to one another to form the throttle valve 1. The actuation module 22 supports the housing chamber 9, the electric motor 3, the gear transmission 8 and the lid 10; instead, the valve module 23 supports the valve seat 4, the disk element 5, and the shaft 6.

The actuation module 22 can be mechanically connected to the valve module 23 by means of various types of mechanical interfaces, for example, by means of mechanical fit combined with screws, by means of mechanical fit combined with adhesive, or else by means of non-reversible mechanical fit (also referred to as "snap fit"). When the actuation module 22 is mechanically connected to the valve module 23, the shaft 6 of the disk element 5 is fitted to the gear 21 (i.e., to the end gear of the gear transmission 8) so as to connect the shaft 6 itself to the gear transmission 8. For said purpose, the gear 21 preferably has a seat for engagement of the shaft 6 of the disk element 5.

It should be emphasized that the valve module 23 has a substantially tubular cylindrical shape possibly provided with reinforcement fins or ribbings. Consequently, the valve module 23 has a symmetrical distribution of the mass, and it is hence possible to make the valve module 23 of moulded plastic material (for example, technopolymers), thus obtaining, without having to resort to any particular arrangements (i.e., in an inexpensive way), a high precision of construction (in particular, a high circularity of the conduit) in so far as the inevitable shrinkage of the plastic material during solidification will be symmetrical.

Also the actuation module 22 has a rather symmetrical distribution of the mass, and it is possible to make the valve module 23 of moulded plastic material (for example, technopolymers), thus obtaining, without having to resort to any particular arrangements (i.e., in an inexpensive way), a good precision of fabrication.

It is evident that, by providing the actuation module 22 separate from the valve module 23, one and the same actuation module 22 can be coupled to different valve modules 23 (or vice versa) enabling advantageous economies of scale to be achieved. Typically, one and the same actuation module 22 is coupled to valve modules 23 of different dimensions so as to provide a series of throttle valves 1 suitable for being mounted in various types of internal-combustion engines.

The throttle valve 1 described above is simple and inexpensive to produce in that there is not envisaged the presence of any angular-position sensor in addition to the three angular-position sensors 13 integrated in the electric motor 3 and in that the lid 10 of the housing chamber 9 has only functions of closing in a fluid-tight way the housing chamber 9 itself. This constructional solution presents the dual advantage of minimizing both the total number of electrical connections between the different components and the errors of assembly due to the chain of the tolerances.

In addition, the fact of envisaging the actuation module 22 separate from the valve module 23 enables reduction in the total production costs of the valve body 2 given the same constructional precision.

## Claims

1. A throttle valve (1) for an internal-combustion engine; the throttle valve (1) comprises:
a valve body (2);
an electric motor (3);
a valve seat (4);
a turnable disk element or butterfly (5), which engages the valve seat (4) and is mounted on a shaft (6) so that it can rotate about an axis (7) of rotation to turn between an opening position and a closing position of the valve seat (4) under the thrust of the electric motor (3);
a gear transmission (8) to connect the electric motor (3) to the shaft (6) of the disk element (5); and
an electronic control unit (18) designed to drive the electric motor (3) according to a feedback control logic using as feedback quantity the angular position of the disk element (5) about the axis (7) of rotation;
the throttle valve (1) is **characterized in that**:
the electric motor (3) is a three-phase brushless motor and
comprises three stator windings (12) mechanically spaced apart from one another by 120° and three angular-position sensors (13), which are integrated in the electric motor (3), are designed to determine the angular position of a rotor of the electric motor (3), and are mechanically spaced apart from one another by 120°; and
the electronic control unit (18) uses the signals supplied by the three angular-position sensors (13) both to determine the angular position of the rotor and hence handle switching of the electrical supply of the three stator windings (12) and to determine the angular position of the disk element (5) about the axis (7) of rotation.

2. The throttle valve (1) according to Claim 1, wherein the three angular-position sensors (13) integrated in the electric motor (3) are Hall-effect sensor.

3. The throttle valve (1) according to Claim 1 or Claim 2, wherein the gear transmission (8) comprises a first gear (19), which is fixed to the rotor of the electric motor (3) and meshes with an external ring gear of a second idle gear (20), and an internal ring gear of the second idle gear (20) meshes with a third gear (21) fixed to the shaft (6) of the disk element (5).

4. The throttle valve (1) according to Claim 1, Claim 2 or Claim 3, wherein made in the valve body (2) is a housing chamber (9), which houses the electric motor (3) and the gear transmission (8) and is closed in a fluid-tight way by a removable lid (10).

5. The throttle valve (1) according to Claim 4, wherein the valve body (2) is made up of an actuation module (22) and a valve module (23), which are made independently with respect to one another and are joined to one another; the actuation module (22) supporting the housing chamber (9), the electric motor (3), the gear transmission (8), and the lid (10); the valve module (23) supporting the valve seat (4), the disk element (5), and the shaft (6).

6. The throttle valve (1) according to Claim 5, wherein, when the actuation module (22) is mechanically connected to the valve module (23), the shaft (6) of the disk element (5) is fitted to an end gear (21) of the gear transmission (8) so as to connect the shaft (6) itself to the gear transmission (8).

7. The throttle valve (1) according to Claim 6, wherein the end gear (21) of the gear transmission (8) has a seat for engagement of the shaft (6) of the disk element (5).

8. The throttle valve (1) according to Claim 5, Claim 6 or Claim 7, wherein the actuation module (22) is mechanically connected to the valve module (23) by means of mechanical fit combined with screws.

9. The throttle valve (1) according to Claim 5, Claim 6 or Claim 7, wherein the actuation module (22) is mechanically connected to the valve module (23) by means of mechanical fit combined with adhesive.

10. The throttle valve (1) according to Claim 5, Claim 6 or Claim 7, wherein the actuation module (22) is mechanically connected to the valve module (23) by means of non-reversible mechanical fit (snap fit).

11. A throttle valve (1) for an internal-combustion engine; the throttle valve (1) comprising:
a valve body (2);
an electric motor (3);
a valve seat (4);
a turnable disk element or butterfly (5), which engages the valve seat (4) and is mounted on a shaft (6) so that it can rotate about an axis (7) of rotation to turn between an opening position and a closing position of the valve seat (4) under the thrust of the electric motor (3);
a gear transmission (8) to connect the electric motor (3) to the shaft (6) of the disk element (5); and
a housing chamber (9), which is made in the valve body (2) and houses the electric motor (3) and the gear transmission (8) and is closed in a fluid-tight way by a removable lid (10); the throttle valve (1) is **characterized in that** the valve body (2) is made up of an actuation module (22) and a valve module (23), which are made independently with respect to one another and are joined to one another; the actuation module (22) supporting the housing chamber (9), the electric motor (3), the gear transmission (8), and the lid (10); the valve module (23) supporting the valve seat (4), the disk element (5), and the shaft (6).

12. The throttle valve (1) according to Claim 11, wherein the gear transmission (8) comprises a first gear (19), which is fixed to a rotor of the electric motor (3) and meshes with an external ring gear of a second idle gear (20), and an internal ring gear of the second idle gear (20) meshes with a third gear (21) fixed to the shaft (6) of the disk element (5).

13. The throttle valve (1) according to Claim 11 or Claim 12, wherein, when the actuation module (22) is mechanically connected to the valve module (23), the shaft (6) of the disk element (5) is fitted to an end gear (21) of the gear transmission (8) so as to connect the shaft (6) itself to the gear transmission (8).

14. The throttle valve (1) according to Claim 13, wherein the end gear (21) of the gear transmission (8) has a seat for engagement of the shaft (6) of the disk element (5).

15. The throttle valve (1) according to Claim 12, Claim 13 or Claim 14, wherein the actuation module (22) is mechanically connected to the valve module (23) by means of mechanical fit combined with screws.

16. The throttle valve (1) according to Claim 12, Claim 13 or Claim 14, wherein the actuation module (22) is mechanically connected to the valve module (23) by means of mechanical fit combined with adhesive.

17. The throttle valve (1) according to Claim 12, Claim 13 or Claim 14, wherein the actuation module (22) is mechanically connected to the valve module (23) by means of non-reversible mechanical fit (snap fit).
